# EUROPEAN PATENT APPLICATION

(11) **EP 2 189 656 A2**
(43) Date of publication of application: **26.05.2010**
(21) Application number: 09176325.0
(22) Date of filing: 18.11.2009
(51) Int. Cl.: F03D 7/02

(54) **Wind turbine yawing system**

(30) Priority: 20.11.2008 DK 200801627; 20.11.2008 US 199941 P
(71) Applicant: Vestas Wind Systems A/S, 8940 Randers - SV (DK)
(72) Inventor: Li, Xiao Qian, 600064, Singapore (SG); Narasimalu, Srikanth, 535206, Singapore (SG); Sandvad, Ingemann Hvas, 6950 Ringkobing (DK)
(74) Representative: Plougmann & Vingtoft A/S

(57) **Abstract**

E.g. in order to prevent minor deviations from expected operation in a yawing system before they lead to larger deviations, there is in accordance with a method aspect of the invention disclosed monitoring and determining deviation from an expected operation in a yawing system of a wind turbine. The method includes inputting a rotation angle input to at least one of a plurality of yaw motors, sensing an angular output of at least one of the plurality of yaw motors, receiving the rotation angle input to the at least one of the plurality of yaw motors in a signal processor, receiving the angular output of the at least one of the plurality of yaw motors, comparing at least two of the received signals, and/or comparing a mathematical relation of two of the received signals with a reference, and hereby determining whether there is any deviation from the expected operation.

## Description

### FIELD OF THE INVENTION

The invention relates to a wind turbine yawing system and to a method of monitoring and determining deviation from an expected operation in a yawing system of a wind turbine.

### BACKGROUND OF THE INVENTION

In a wind turbine a yawing system turns a nacelle of the wind turbine to a preferred angle relative to a wind turbine tower among others in order to improve power efficiency of the wind turbine or for vibration reduction. The yawing system rotating the nacelle is conventionally driven by multiple yaw motors, which may be hydraulic or electric, through one or more yaw gears and suitable bearings.

An obtained position of the nacelle is possibly held and locked by brakes until next yawing. Failure modes such as slipping or breakage damage or unidentified or false alarms may be encountered in yaw systems, which possibly cause production stoppages or unscheduled maintenances.

The yaw gear of a wind turbine may have a step up ratio of e.g. 1 to 12.000-18.000 and forces caused by the wind turbine under wind load are extensive. Consequently, relative small deviations, such as in a yaw gear, may further lead to other substantial deviations in the yawing system.

### SUMMARY OF THE INVENTION

It may be seen as an aim of the present invention to provide an improved wind turbine yawing system, an improved method of monitoring and determining deviation from expected operation in a yawing system of a wind turbine. Preferably, the invention alleviates, mitigates or eliminates one or more of the above or other disadvantages singly or in any combination.

In particular, it may be seen as an aim of the invention to provide a wind turbine yaw system with a reduced need for scheduled or unscheduled maintenance, when compared to existing yawing systems. Still further, it may be seen as an aim of the invention to decrease any difference between an actual load and a reference load for each individual drive of the wind turbine yawing system.

In consequence, there is provided a wind turbine yawing system for rotating a wind turbine nacelle a rotating angle relative to a wind turbine tower, the yawing system including
- a plurality of yaw motors arranged to provide the rotation angle by providing driving motion to a yaw gear coupled to the yaw motors, each of the yaw motors being arranged to receive a rotation angle input, and
- a yaw motor output angle sensor associated with the plurality of yaw motors, the output angle sensor is positioned and arranged to sense an angular output of each yaw motor of the plurality of yaw motors.

Thus an improved wind turbine yawing system for rotating a wind turbine nacelle a rotating angle relative to a wind turbine tower is provided. A possible improvement or advantage may lie therein that when equipping the yawing system as described a yawing system is provided which makes it possible, e.g., to prevent failure modes or minor deviations from expected operation before they lead to more severe faults or larger deviations or extensive wear. Extensive wear may e.g. be due to a single motor, due to a certain deviation in the yawing system, always or sometimes, being subjected to a load which is too high when compared to a maximum or reference load of the single motor. It is to be understood that the above wording foresees a solution where each of the yaw motors are equipped with an angle output sensor or a solution where a common angle sensor for all or some of the yaw motors, which common sensor is capable of sensing an output angle of each individual yaw motor separately.

When further equipping the wind turbine yawing system with a nacelle angle output sensor positioned and adapted for determining the rotation angle of the wind turbine nacelle relative to the tower, a possible advantage is that a complete transmission chain of the yawing system can be monitored while still being able to separate any deviations from an expected operation in specific sub levels or tiers of the transmission chain. Such sub levels may be between electrical angle input to a motor and an actual mechanical angle output of the motor or between the actual mechanical angle output of the motor and the rotation angle of the nacelle.

When furthermore providing the wind turbine yawing system with a signal processor arranged to receive the rotation angle input of at least one of the plurality of yaw motors, the angular output of at least one of the plurality of yaw motors, or possibly also to receive the rotation angle of the wind turbine nacelle relative to the wind turbine tower, and to compare at least two of the received signals, additionally or alternatively to compare a mathematical relation of two of the received signals with a reference, and hereby to determine whether there is any deviation from expected operation, a complete yawing monitoring and deviation system determination system is provided.

When at least one of the yaw motor output angle sensor, and the nacelle angle output sensor is a non-contact sensor, a possible advantage is that a solution for sensing the angles which allows for a low maintenance level is provided.

When the non-contact sensor is comprised in the following groups of sensors; a piezoelectric sensor, a magnetic sensor, an optical grating sensor, a capacitive sensor, an inductive sensor, a MEMS sensor, a possible advantage is that commercially available sensors are used.

In accordance with a method aspect of the invention there is provided a method of monitoring and determining deviation from an expected operation in a yawing system of a wind turbine where a wind turbine nacelle and a wind turbine tower are rotatable relative to each other via the yawing system, the method including
- inputting a rotation angle input to at least one of a plurality of yaw motors,
- sensing an angular output of at least one of the plurality of yaw motors,
- receiving the rotation angle input to the at least one of the plurality of yaw motors in a signal processor, and
- receiving the angular output of the at least one of the plurality of yaw motors in the signal processor,
- comparing at least two of the received signals,
- additionally or alternatively comparing a mathematical relation of two of the received signals with a reference, and hereby
- determining whether there is any deviation from the expected operation,
- giving a signal indicative of any determined deviation.

Possibly the method also includes determining a rotation angle of the wind turbine nacelle relative to a tower, and receiving the rotation angle of the wind turbine nacelle relative to the wind turbine tower in the signal processor.

When the described method is followed by inputting a rotation angle of an opposite direction, a possible advantage is that any backlash or similar deviations in the yawing system may become increasingly easy to determine. Similarly, certain variables may be eliminated when the wind turbine nacelle is in a braked mode upon inputting rotation angle inputs.

When a time interval for obtaining a given yawing angle is determined, such as under conditions such as low or no wind, a possible advantage is that a simple way of determining an overall capability of the yawing system is provided.

It must be understood that any advantage mentioned may be seen as a possible advantage provided by the invention, but it may also be understood that the invention is particularly, but not exclusively, advantageous for obtaining the described advantage.

In general the various aspects and advantages of the invention may be combined and coupled in any way possible within the scope of the invention.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 shows a wind turbine, and
FIG. 2 illustrates a yawing system of the wind turbine, and
FIG. 3 is an angle input-output illustration of a transmission chain of the yawing system, and
FIG. 4 illustrates a method of monitoring and determining any deviation from expected operation in a yawing system.

### DESCRIPTION OF EMBODIMENTS

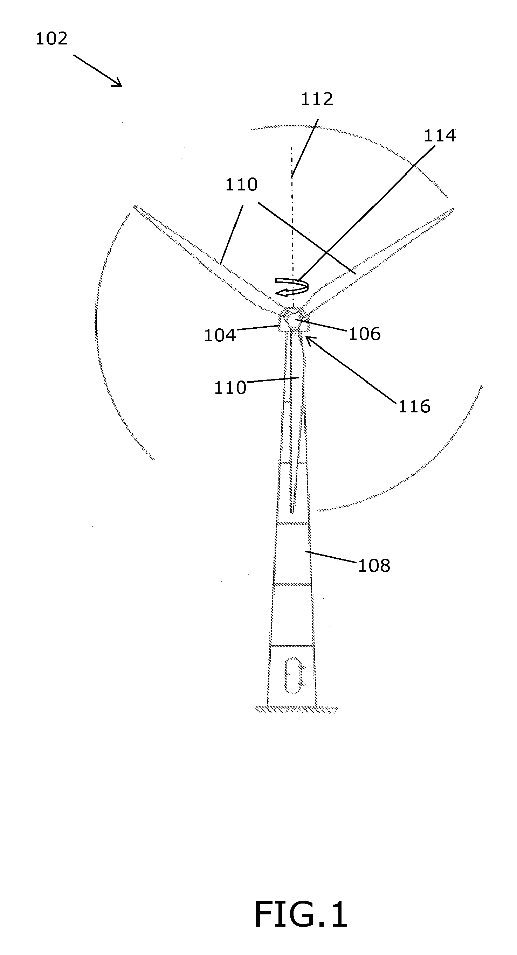

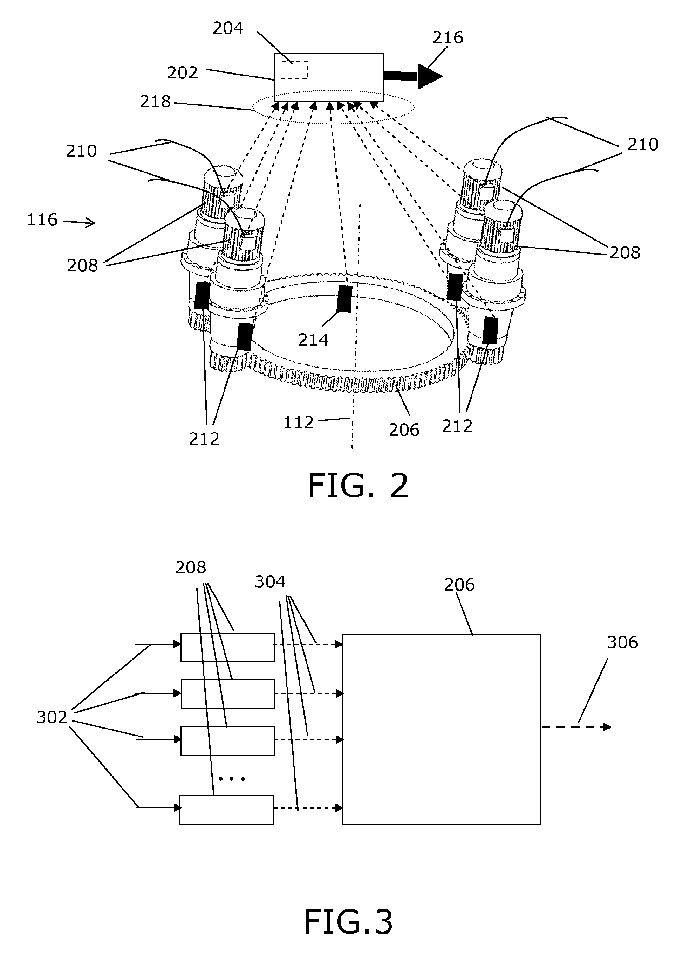

FIG 1 shows a wind turbine 102 with a nacelle 104, and a hub 106 with blades rotatably mounted to the nacelle 104 via a main shaft. The nacelle 104 is rotatably mounted on a wind turbine tower 108. The nacelle and the hub can rotate a certain rotating angle 114 around a main axis 112 of the wind turbine tower 108. To rotate the nacelle with the hub around the main axis 112 is referred to as to 'yaw the nacelle 104'. In order to provide yawing of the nacelle, the nacelle includes a wind turbine yawing system 116 (not seen) included in a linkage between the nacelle 104 and the tower 108. The yawing system is shown and described in more details in figures 2 and 3.

FIG. 2 illustrates the yawing system 116 and a signal processor 202, the yawing system includes a plurality of yaw motors 208 arranged to rotate the nacelle by providing driving motion to a yaw gear 206 coupled to the yaw motors 208.

Each of the yaw motors is arranged to receive a rotation angle input 210 and each of the plurality of yaw motors includes a yaw motor output angle sensor 212. The rotation angle input may be provided as a rotation angle to be obtained but may as example alternatively be a time period which the yaw motor must be on or any other similar input in order to provide a certain rotation angle by the yaw motor. The yaw motor output angle sensor 212 is positioned and arranged to sense an angular output of the yaw motor 208. In order e.g. to monitor a complete transmission chain of the yawing system in one step, the yawing system or yawing monitoring system in the shown embodiment further includes a nacelle angle output sensor 214 positioned and adapted for determining the rotation angle of the wind turbine nacelle relative to the tower.

The figure furthermore illustrates a signal processor 202 arranged to receive the rotation angle input 210, possibly of each of the plurality of yaw motors 208, to receive the angular output of each of the plurality of yaw motors 208, as sensed by yaw motor output angle sensors 212, and to receive the rotation angle of the wind turbine nacelle relative to the wind turbine tower. The signal processor 202 is also adapted to compare at least two of the received signals 218, and/or to compare a mathematical relation of two of the signals 218 with a reference 204, and to determine whether there is any deviation 216 from expected operation.

Defined as an angle difference, e.g. a positioning accuracy of the yaw motors and yaw gear system is measured with respective sensors 212, 214 to track the system's aging or wear-out status and identify root causes of faults. Multiple parameters can be used for monitoring yaw health conditions: a) Single and accumulating positioning errors, backlash amounts at reversing, motion at braking and simultaneous gear engagement, as an example by comparing each yaw motor's output with the yaw gear output. b) The system's smooth motion can be determined by checking yaw speed or time interval for rotating a given yawing angle.

Possible advantages by the system are that compared to other parameters, positioning accuracy is robust and relative easy for setting warning thresholds to predict yaw aging conditions, possibly under varied operating conditions.

There are several types of non-contact sensors 212, 214 commercially available. Most of the quality sensors are robust and the sensors are preferably also in small sizes, convenient to install and preferably suitable for measurement at less than 0.1 degree repeatability. Such sensors may be inductive or capacitive sensors, piezoelectric, magnetic or optical grating sensors and possibly of the micromechanical system type (MEMS-type).

FIG. 3 is an angle input-output illustration of a transmission chain of the yawing system. The illustration show the angle input 302 which is inputted to the plurality of yawing motors 208. The input or inputs 302 are the ones also received at the signal processor 202 shown in figure 2. Possibly the inputs 302 are the same for each motor and a common input may be inputted to the motors and received at the signal processor 202 instead of a plurality of inputs.

A measured angle output of each yaw motor 208 is measured or sensed at 304 in an operation situation of the wind turbine where the yaw motors are coupled to the yaw gear 206. The yaw gear angle output 306 provided in a response to one or more electrical angle inputs 302 are also shown.

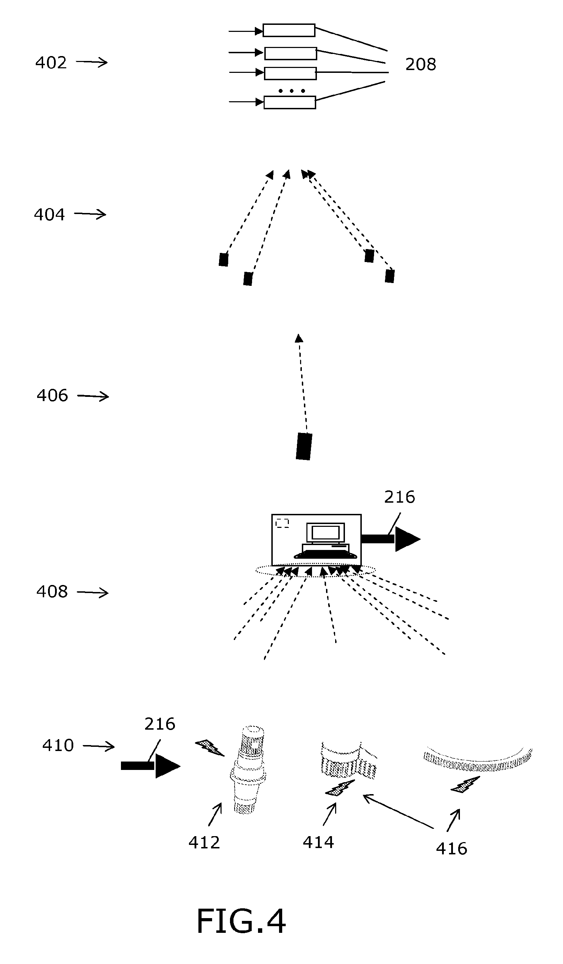

FIG. 4 illustrates a method of monitoring and determining deviation from an expected operation in a yawing system of a wind turbine where a wind turbine nacelle and a wind turbine tower are rotatable relative to each other via the yawing system. The method includes inputting 402 a rotation angle input to at least one of a plurality of yaw motors, sensing 404 an angular output of at least one of the plurality of yaw motors, receiving 408 the rotation angle input to the at least one of the plurality of yaw motors in a signal processor, receiving 408 the angular output of the at least one of the plurality of yaw motors in the signal processor, comparing 408 at least two of the received signals, and/or comparing a mathematical relation of two of the received signals with a reference, and hereby determining whether there is any deviation 410 from the expected operation, and finally giving a signal indicative of any determined deviation.

In the illustration a preferred, though additional, method step of 406 determining a rotation angle of the wind turbine nacelle relative to a tower, and receiving 408 the rotation angle of the wind turbine nacelle relative to the wind turbine tower in the signal processor is also shown.

The deviation may as examples be anyone of the following types of deviations or malfunctions, such as; wear in a yaw motor 412, wear in a mechanical coupling 414 between one of the plurality of yaw motors and the yaw gear, wear in the yaw gear 416.

In short it is herein disclosed that in order e.g. to prevent minor deviations from an expected operation in a yawing system before they lead to larger deviations, there is in accordance with a method aspect of the invention disclosed monitoring and determining deviation from the expected operation in a yawing system of a wind turbine. The method includes inputting a rotation angle input to at least one of a plurality of yaw motors, sensing an angular output of at least one of the plurality of yaw motors, receiving the rotation angle input to the at least one of the plurality of yaw motors in a signal processor, receiving the angular output of the at least one of the plurality of yaw motors, comparing at least two of the received signals, and/or comparing a mathematical relation of two of the received signals with a reference, and hereby determining whether there is any deviation from the expected operation.

Although the present invention has been described in connection with preferred embodiments, it is not intended to be limited to the specific form set forth herein. Rather, the scope of the present invention is limited only by the accompanying claims.

In this section, certain specific details of the disclosed embodiment are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the spirit and scope of this disclosure. Further, in this context, and for the purposes of brevity and clarity, detailed descriptions of well-known apparatus, circuits and methodology have been omitted so as to avoid unnecessary detail and possible confusion.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality.

## Claims

1. A wind turbine yawing system for rotating a wind turbine nacelle a rotating angle relative to a wind turbine tower, the yawing system comprising
- a plurality of yaw motors arranged to provide the rotation angle by providing driving motion to a yaw gear coupled to the yaw motors, each of the yaw motors being arranged to receive a rotation angle input, and
- a yaw motor output angle sensor associated with the plurality of yaw motors, the output angle sensor is positioned and arranged to sense an angular output of each yaw motor of the plurality of yaw motors.

2. A wind turbine yawing system according to claim 1 further comprising
- a nacelle angle output sensor positioned and adapted for determining the rotation angle of the wind turbine nacelle relative to the tower.

3. A wind turbine yawing system according to claim 1, further comprising
- a signal processor arranged to
- receive the rotation angle input of at least one of the plurality of yaw motors, the angular output of at least one of the plurality of yaw motors, and
- to compare at least two of the received signals,
- additionally or alternatively to compare a mathematical relation of two of the received signals with a reference, and hereby
- to determine whether there is any deviation from expected operation.

4. A wind turbine yawing system according to claim 2, further comprising
- a signal processor arranged to
- receive the rotation angle input of at least one of the plurality of yaw motors, the angular output of at least one of the plurality of yaw motors receive and the rotation angle of the wind turbine nacelle relative to the wind turbine tower, and
- to compare at least two of the received signals,
- additionally or alternatively to compare a mathematical relation between two of the received signals with a reference, and hereby
- to determine whether there is any deviation from expected operation.

5. A wind turbine yawing system according to any of the preceding claims 1-4, wherein the yaw motor output angle sensor is a non-contact sensor.

6. A wind turbine yawing system according to any of the preceding claims 2-4, wherein the nacelle angle output sensor is a non-contact sensor.

7. A wind turbine yawing system according to claim 5 or 6, wherein the non-contact sensor is comprised in the following groups of sensors; a piezoelectric sensor, a magnetic sensor, an optical grating sensor, an inductive sensor, a capacitive sensor, a micromechanical system sensor.

8. A wind turbine comprising a yawing system according to any of the claims 1-7.

9. A method of monitoring and determining deviation from an expected operation in a yawing system of a wind turbine where a wind turbine nacelle and a wind turbine tower are rotatable relative to each other via the yawing system, the method comprising
- inputting a rotation angle input to at least one of a plurality of yaw motors,
- sensing an angular output of at least one of the plurality of yaw motors,
- receiving the rotation angle input to the at least one of the plurality of yaw motors in a signal processor, and
- receiving the angular output of the at least one of the plurality of yaw motors in the signal processor,
- comparing at least two of the received signals,
- additionally or alternatively comparing a mathematical relation of two of the received signals with a reference, and hereby
- determining whether there is any deviation from the expected operation,
- giving a signal indicative of any determined deviation.

10. A method of monitoring and determining deviation from the expected operation in a yawing system of a wind turbine according to claim 9, further comprising
- determining a rotation angle of the wind turbine nacelle relative to a tower, and
- receiving the rotation angle of the wind turbine nacelle relative to the wind turbine tower in the signal processor,
- comparing at least two of the received signals,
- additionally or alternatively comparing at least one of the received signals with a reference signal,
- determining whether there is any deviation from the expected operation,
- giving a signal indicative of any determined deviation.

11. A method of monitoring and determining deviation from the expected operation in a yawing system of a wind turbine according to claim 9 or 10, wherein the described method is followed by inputting a rotation angle of an opposite direction.

12. A method of monitoring and determining deviation from expected operation in a yawing system of a wind turbine according to claim 9, wherein the wind turbine nacelle is in a braked mode upon inputting rotation angle inputs.

13. A method of monitoring and determining deviation from expected operation in a yawing system of a wind turbine according to claim 10, wherein a time interval for obtaining a given yawing angle is determined.
